Europäisches Patentamt

European Patent Office

Office européen des brevets

(19)

(11) Numéro de publication : **0 461 047 B1**

(12) **FASCICULE DE BREVET EUROPEEN**

(45) Date de publication du fascicule du brevet :
02.08.95 Bulletin 95/31

(51) Int. Cl.⁶ : **H01M 4/73**, H01M 4/68

(21) Numéro de dépôt : **91420159.5**

(22) Date de dépôt : **16.05.91**

(54) **Support collecteur pour électrodes d'accumulateur plomb/oxyde de plomb.**

(30) Priorité : **25.05.90 FR 9006750**

(43) Date de publication de la demande :
**11.12.91 Bulletin 91/50**

(45) Mention de la délivrance du brevet :
**02.08.95 Bulletin 95/31**

(84) Etats contractants désignés :
**BE CH DE ES GB IT LI NL**

(56) Documents cités :
**DATABASE WPI, accession no. 79-66123B
[36], Derwent Publications Ltd, Londres, GB
PATENT ABSTRACTS OF JAPAN, vol. 7, no. 62
(E-164)[1207], 15 mars 1983
PATENT ABSTRACTS OF JAPAN, vol. 7, no.
226 (E-202)[1371], 7 octobre 1983**

(73) Titulaire : **SORAPEC S.A.
192, rue Carnot
F-94120 Fontenay-sous-Bois (FR)**

(72) Inventeur : **Doniat, Denis
3 bis, rue Jean-Baptiste Lanoz
F-94170 Le Perreux (FR)**
Inventeur : **Bronoel, Guy
13, rue Jean de La Bruyère
F-78000 Versailles (FR)**
Inventeur : **Besse, Serge
13, rue Gagnée
F-94200 Ivry-sur-Seine (FR)**
Inventeur : **Tassin, Noelle
1, rue Beauséjour
F-94120 Fontenay-sous-Bois (FR)**

(74) Mandataire : **Leszczynski, André
NONY & ASSOCIES
29, rue Cambacérès
F-75008 Paris (FR)**

## Description

La présente invention se rapporte à un support collecteur pour électrodes d'accumulateur plomb/oxyde de plomb.

Dans ce type d'accumulateur, comme dans beaucoup d'autres, les électrodes sont constituées d'un support dont un des buts est de conférer la tenue mécanique et la pérennité géométrique. Ce support, réalisé dans une matière inerte minérale ou organique, est habituellement recouvert ou revêtu d'une ou plusieurs couches conductrices dont le but est de faciliter la mobilisation et le déplacement des électrons mobilisés durant le processus de charge ou de décharge. C'est la raison pour laquelle ces supports sont parfois appelés "collecteurs" ou mieux encore "supports collecteurs", expression qui sera utilisée ici. Sur ce support collecteur, on empâte de la matière active et l'ensemble forme l'électrode.

La réalisation de supports collecteurs allégés constitués par une âme en polymère revêtue de plomb a déjà été préconisée en vue de la réalisation d'électrodes pour accumulateurs plomb/oxyde de plomb à haute énergie massique. L'objet de l'invention part de l'observation que, pour l'obtention à la fois de bonnes caractéristiques massiques et volumiques, notamment à des régimes sévères de charge et décharge, il est indispensable de définir avec précision la forme géométrique des supports collecteurs et leurs dimensions. En outre, il faut maintenir la cohésion des matières actives pour assurer une bonne longévité aux électrodes, notamment aux électrodes positives, ce qui requiert là également une maîtrise de la géométrie des supports collecteurs.

Comme il sera exposé plus loin, la prise en compte de toutes ces contraintes est malaisée, dans la mesure où certains des paramètres concernés sont contradictoires, varient dans un sens contraire l'un à l'autre et surtout de façon non-linéaire. Selon les régimes utilisés, la variation du même paramètre peut aller dans un sens, ou dans l'autre.

La Demanderesse a mis au point, à l'issue de nombreux essais, un support collecteur dont la structure et la nature permettent la réalisation d'électrodes particulièrement efficaces pour les accumulateurs au plomb/oxyde de plomb, compte-tenu des phénomènes non linéaires exposés plus et de leur caractère souvent erratique et surprenant.

Selon l'invention donc, le support collecteur pour électrodes d'accumulateur plomb/oxyde de plomb est constitué d'un maillage polymère résistant aux électrolytes, revêtu d'une sous-couche conductrice et d'une couche de plomb ou d'un alliage et riche en plomb de masse surfacique comprise entre 30 et 40 g/dm2. Les dimensions de la maille sont telles qu'aucun point situé à l'intérieur du motif de la maille ne puisse se trouver à une distance supérieure à 2,5 mm d'un brin quelconque de la maille.

Par "masse surfacique comprise entre 30 et 40 g/dm2", il faut entendre la masse par rapport à la surface projetée du support collecteur et non pas par rapport à la seule surface occupée par les brins constituant la maille. Cette surface correspond à la surface apparente telle qu'elle se présenterait en projection sur un plan parallèle à la maille, brins et ouvertures compris. Les valeurs de "30 à 40 g/dm2" pour la masse surfacique est une gamme de valeurs idéale dans la mesure où une valeur de 30 g/dm2 assure un bon drainage des charges électroniques par le plomb ou l'alliage riche en plomb, tandis qu'au delà de 40 g/dm2, l'accroissement des propriétés obtenues devient trop faible.

De préférence, la sous-couche conductrice est en cuivre ou en plomb et a une épaisseur inférieure à 5 μm, tandis que la couche de plomb ou de l'alliage riche en plomb, par exemple un alliage plomb/antimoine, est un dépôt électrolytique.

De préférence encore, la maille est rectangulaire et son ouverture a des dimensions comprises entre 3 et 5 mm pour le petit côté et 10 et 20 mm pour le grand côté, l'épaisseur du support collecteur, avant revêtement par les couches et sous-couches, étant comprise entre 1 et 4 mm. Une bonne dimension de maille est 4 x 15 mm. Par "ouverture" on entend désigner la surface libre de la maille, c'est-à-dire l'écart entre deux brins consécutifs, bords à bords.

En variante, plus particulièrement destiné à la réalisation d'électrodes positives mais également utilisable pour des électrodes négatives, le support collecteur est constitué d'un premier maillage central à motifs en carrés ou losanges et deux autres maillages latéraux solidaires du premier maillage. Le maillage central est solidarisé à ces maillages latéraux au point de contact des brins qui les constituent, par exemple par soudage ou collage.

Avantageusement, les brins du maillage central ont une épaisseur comprise entre 1 et 4 mm, les maillages latéraux ont au moins une des dimensions inférieures à 3 mm. Les brins des maillages latéraux peuvent avoir à leur tour une épaisseur comprise entre 0,5 et 1,5 mm.

De préférence, le maillage central est à grosses mailles, par exemple maille carrée d'ouverture de 20 mm de côté et les maillages latéraux sont plus petits, par exemple mailles carrées de 3 à 3,3 mm de côté.

On peut préparer le support collecteur par un procédé consistant à :

- découper un support en polyéthylène ou polypropylène ou en d'autres matériaux résistant aux électrolytes, l'acide sulfurique notamment,
- avantageusement décaper le support, par exemple par un mélange sulfochromique concentré ou par effluvage,
- déposer une sous-couche conductrice, par exemple par réduction chimique ou par pulvérisation cathodique ou vaporisation sous vide pour le plomb ou le cuivre, et
- déposer une masse surfacique constante de plomb par exemple par électrolyse dans un bain à base de fluoborate, ou de plomb ou d'un alliage plomb/antimoine par galvanoplastie.

Lorsque le support collecteur comprend un maillage central et deux maillages latéraux, seuls les maillages latéraux, ou bien tous les maillages, peuvent être recouverts de la sous-couche et de la couche.

Par empâtage de la masse active, généralement une pâte d'oxyde de plomb avec l'acide sulfurique et divers additifs, dans les espaces libres de la maille et empâtage sous pression, par exemple à 100 kg/cm2, on aura réalisé l'électrode.

**EXEMPLE 1**

On prépare un support collecteur par découpage d'un support de polypropylène, en réalisant un maillage de forme rectangulaire dont les ouvertures sont de 15 mm x 4 mm. On décape ce support dans un mélange sulfochromique concentré pendant trois heures à une température comprise entre 60° et 80° C, puis pendant vingt heures à la température ambiante. On dépose alors par réduction chimique une sous-couche conductrice de cuivre d'une épaisseur inférieure à 5 $\mu$m, puis on dépose une masse surfacique constante de plomb de 30 g/dm2, par électrolyse dans un bain à base de fluoborate.

Pour réaliser l'électrode, on empâte le support collecteur ainsi préparé avec une masse active pâteuse à base d'oxyde de plomb et d'une solution d'acide sulfurique, dans les espaces libres de la maille et on compacte à 100 kg/cm$^2$ ou on lamine.

On laisse reposer pendant 72 heures à l'air libre, puis on met en formation dans une solution $H_2SO_4$ de d = 1,07 pendant 60 heures de charge au régime 0,1 C (C étant la capacité théorique), puis décharge au régime 0,1 C.

Pour déterminer la capacité, on immerge dans une solution $H_2SO_4$ de d = 1,25. On charge à 0,1 C pendant 11 heures et décharge à 0,1 C jusqu'à $V_{cellule}$ (Pb-PbO$_2$) = 1,8 V.

On détermine ainsi le rendement faradique de l'électrode ainsi fabriquée par rapport à la capacité électrique restituée en décharge à la capacité théorique donnée par la masse de matière active ayant servi à empâter le support collecteur, soit une capacité théorique de 259 mA/g de matière sèche. Le rendement trouvé est de 61 % à C/10 (C représente la capacité théorique, tandis que 10 représente le nombre d'heures ; en l'occurrence l'expression C/10 signifie dix heures de charge ou de décharge).

Pour cette même électrode, on mesure la capacité volumique, dans laquelle le volume de référence est le volume total de l'électrode on constate que ces capacités sont respectivement de 553 mA/cm$^2$ pour des régimes C/10 et de 240 mA/h/cm$^2$ pour un régime 2C (charge ou décharge d'une demi-heure).

**EXEMPLES COMPARATIFS**

On fabrique une série d'électrodes comme indiqué à l'exemple précédent, mais à maille carrée avec une ouverture de 2 mm, respectivement 5mm, respectivement 10mm, conformément au tableau ci-dessous. On mesure alors les rendements, les capacités volumiques et les capacités massiques et on obtient les résultats donnés sur les tableaux qui suivent, dans lesquels C/20 indique un régime de charge ou de décharge de vingt heures.

| Régime de décharge | a = 2 mm | a = 5 mm | a = 10 mm |
|---|---|---|---|
| | | Rendement % | |
| C/20 | 64 | 60,4 | 60 |
| C/10 | 55 | 49,5 | 48 |
| 2 C | 35 | 23 | 21 |

On constate tout d'abord que le rendement est d'autant plus élevé que la maille est plus petite. En revanche, si on compare les capacités volumiques, on constate les résultats suivants :

| Régime de décharge | a = 2 mm | a = 5 mm | a = 10 mm |
|---|---|---|---|
| | | Capacités volumiques mAh/cm³ | |
| C/20 | 442 | 470 | 490 |
| 2 C | 242 | 180 | 170 |

A faible régime, les capacités volumiques des électrodes à mailles les plus petites sont les plus faibles, mais le contraire est observé à régime plus sévère (2 C). Des observations similaires peuvent être formulées pour ce qui est des capacités massiques des électrodes :

| Régime de décharge | a = 2 mm | a = 5 mm | a = 10 mm |
|---|---|---|---|
| | Capacités massiques mAh/g | | |
| C/20 | 98 | 106 | 109 |
| 2 C | 53,5 | 40,5 | 37,8 |

On portera son attention sur le fait que les variations des résultats obtenus ne sont pas déductibles des variations des paramètres mis en jeu et que, par conséquent, la sélection selon l'invention ne résulte pas de simples interpolations.

**EXEMPLE 2**

On prépare une électrode comme décrit à l'exemple 1, mais dont la structure est plus complexe dans la mesure où le support collecteur est tout d'abord constitué d'une première maille centrale à grande ouverture carrée de 20 mm de côté, l'épaisseur de ce maillage étant de 3 mm. Il est entouré de deux mailles latérales solidarisées par soudure ou collage au maillage central, les ouvertures des mailles latérales étant de 3,3 mm. La sous-couche de cuivre et la couche de plomb enrobent tous les brins de toutes les mailles et l'empâtage se fait avec la même matière active qu'à l'exemple 1.

On constate que cette électrode résiste particulièrement bien au délitement, phénomène bien connu sur les électrodes positives dans les batteries plomb/acide de plomb. Cette excellente résistance au délitement est maintenue même dans des conditions sévères au cycle de charge et de décharge.

**Revendications**

1. Support collecteur pour électrodes d'accumulateurs plomb/oxyde de plomb, caractérisé en ce qu'il est constitué d'un maillage polymère résistant aux électrolytes revêtu d'une sous-couche conductrice et d'une couche de plomb ou d'un alliage riche en plomb de masse surfacique comprise entre 30 et 40 g/dm2 par rapport à la surface projetée du support collecteur, les dimensions de la maille étant telles qu'aucun point situé à l'intérieur du motif de la maille ne puisse se trouver à une distance supérieure à 2,5 mm d'un brin quelconque de la maille.

2. Support collecteur selon la revendication 1, caractérisé en ce que la sous-couche conductrice a une épaisseur inférieure à 5 $\mu$m.

3. Support collecteur selon la revendication 1, caractérisé en ce que la couche de plomb ou de l'alliage riche en plomb est un dépôt électrolytique.

4. Support collecteur selon la revendication 1, caractérisé en ce que la maille est rectangulaire et que son ouverture a des dimensions comprises entre 3 et 5 mm pour le petit côté et 10 et 20 mm pour le grand côté, l'épaisseur du support collecteur, avant revêtement par les couches et sous-couches, étant comprise entre 1 et 4 mm.

5. Support collecteur selon la revendication 4, caractérisé en ce que la maille est rectangulaire et que son ouverture a des dimensions de 4 x 15 mm.

6. Support collecteur selon la revendication 1, caractérisé en ce qu'il est constitué d'un premier maillage central à motifs en carrés ou losanges et deux autres maillages latéraux solidaires du premier maillage.

7. Support collecteur selon la revendication 6, caractérisé en ce que les brins du maillage central ont une épaisseur comprise entre 1 et 4 mm et que les maillages latéraux ont au moins une dimension inférieure à 3 mm.

8. Support collecteur selon la revendication 6, caractérisé en ce que les brins des maillages latéraux ont une épaisseur comprise entre 0,5 et 1,5 mm.

9. Support collecteur selon la revendication 6, caractérisé en ce que l'ouverture de la maille centrale a 20 mm de côté et que l'ouverture des mailles latérales a 3,3 mm de côté.

10. Utilisation du support collecteur selon la revendication 6, pour la réalisation d'électrodes positives.

## Patentansprüche

1. Kollektorträger für Elektroden eines Blei/Bleioxid-Akkumulators, dadurch gekennzeichnet, daß er gebildet wird durch ein Netzwerk aus gegenüber Elektrolyten beständigem Polymer, das überzogen ist mit einer leitenden Zwischenschicht und einer Schicht aus Blei oder einer bleireichen Legierung mit einem Flächengewicht zwischen 30 und 40 $g/dm^2$ in bezug auf die von dem Kollektorträger überspannte Oberfläche, wobei die Maschengröße so gewählt ist, daß kein im Inneren der Maschenzelle liegender Punkt sich in einem Abstand von mehr als 2,5 mm zu irgendeinem Steg der Masche befinden kann.

2. Kollektorträger nach Anspruch 1, dadurch gekennzeichnet, daß die leitende Zwischenschicht eine Dicke von weniger als 5 μm hat.

3. Kollektorträger nach Anspruch 1, dadurch gekennzeichnet, daß die Schicht aus Blei oder bleireicher Legierung ein galvanischer Niederschlag ist.

4. Kollektorträger nach Anspruch 1, dadurch gekennzeichnet, daß die Masche rechteckig ist und daß ihre Öffnung Abmessungen zwischen 3 und 5 mm für die kleine Seite und 10 und 20 mm für die große Seite hat, wobei die Dicke des Kollektorträgers vor dem Überziehen mit den Schichten und Zwischenschichten zwischen 1 und 4 mm liegt.

5. Kollektorträger nach Anspruch 4, dadurch gekennzeichnet, daß die Masche rechteckig ist und ihre Öffnung Abmessungen von 4 x 15 mm hat.

6. Kollektorträger nach Anspruch 1, dadurch gekennzeichnet, daß er gebildet wird durch ein erstes zentrales Netzwerk mit quadratischen oder rautenförmigen Maschenzellen und zwei weitere seitliche Netzwerke, die mit dem ersten Netzwerk verbunden sind.

7. Kollektorträger nach Anspruch 6, dadurch gekennzeichnet, daß die Stege des zentralen Netzwerks eine Dicke zwischen 1 und 4 mm haben und daß die seitlichen Netzwerke wenigstens eine Abmessung unter 3 mm haben.

8. Kollektorträger nach Anspruch 6, dadurch gekennzeichnet, daß die Stege der seitlichen Netzwerke eine Dicke zwischen 0,5 und 1,5 mm haben.

9. Kollektorträger nach Anspruch 6, dadurch gekennzeichnet, daß die Maschenöffnung des zentralen Netzwerkes eine Seitenlänge von 20 mm hat und die Maschenöffnung der seitlichen Netzwerke eine Seitenlänge von 3,3 mm hat.

10. Verwendung des Kollektorträgers nach Anspruch 6 für positive Elektroden.

## Claims

1. Collector support for electrodes of lead/lead oxide accumulators, characterized in that it consists of a polymer mesh resistant to electrolytes covered with a conductive sub-layer and a layer of lead or lead-rich alloy with a surface mass of between 30 and 40 g/dm$^2$ in relation to the proposed surface area of the collector support, the dimensions of the mesh being such that no point within the pattern of the mesh can be at a distance greater than 2.5 mm from any strand of the mesh.

2. Collector support according to claim 1, characterized in that the conductive sub-layer has a thickness of less than 5 μm.

3. Collector support according to claim 1, characterized in that the layer of lead or lead-rich alloy is an electrolytic deposit.

4. Collector support according to claim 1, characterized in that the mesh is rectangular and its opening has dimensions of between 3 and 5 mm for the small side and 10 and 20 mm for the large side, the thickness of the collector support covered by the layers and sub-layers being between 1 and 4 mm.

5. Collector support according to claim 4, characterized in that the mesh is rectangular and its opening has dimensions of 4 x 15 mm.

6. Collector support according to claim 1, characterized in that it consists of a first central mesh of square or diamond pattern and two other side meshes forming an integral part of the first mesh.

7. Collector support according to claim 6, characterized in that the strands of the central mesh have a thickness of between 1 and 4 mm and the side meshes have at least one dimension less than 3 mm.

8. Collector support according to claim 6, characterized in that the strands of the side meshes have a thickness of between 0.5 and 1.5 mm.

9. Collector support according to claim 6, characterized in that the opening of the central mesh has a side dimension of 20 mm and the opening of the side meshes has a side dimension of 3.3 mm.

10. Collector support according to claim 6 for the creation of positive electrodes.